# EUROPEAN PATENT APPLICATION

(11) **EP 4 769 820 A1**
(43) Date of publication of application: **01.07.2026**
(21) Application number: 25833493.7
(22) Date of filing: 01.07.2025
(51) Int. Cl.: H01M 50/569, H01M 50/533, H01M 50/172

(54) **BATTERY CELL ASSEMBLY AND BATTERY PACK COMPRISING SAME**

(30) Priority: 03.07.2024 KR 20240087308
(71) Applicant: LG ENERGY SOLUTION, LTD., Seoul 07335 (KR)
(72) Inventor: Park, Jeong Hoon, Daejeon 34122 (KR); Kim, Hong Gyun, Daejeon 34122 (KR)
(74) Representative: BCKIP Part mbB
(86) International application number: PCT/KR2025/009293
(87) International publication number: WO 2026/010307

(57) **Abstract**

Embodiments provide a battery cell assembly. The battery cell assembly includes a first battery cell including a first positive electrode lead and a first negative electrode lead, a second battery cell including a second positive electrode lead and a second negative electrode lead, and a first integrated circuit assembly coupled to the first and second battery cells and including a first insulating frame, and the first insulating frame includes a first slit penetrated by the first negative electrode lead of the first battery cell, a second slit penetrated by the second positive electrode lead of the second battery cell, and a third slit penetrated by the first negative electrode lead of the first battery cell.

## Description

### [Technical Field]

The present disclosure relates to a battery cell assembly and a battery pack including the same. The present application claims the benefit of priority based on Korean Patent Application No. 10-2024-0087308, filed on July 3, 2024, and the entire contents of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the stability of secondary batteries is increasing. A driver's life may be in danger when an accident such as fire occurs in a secondary battery used for mobility and thus research on technology for enhancing the stability of secondary batteries is indispensable.

### [Disclosure]

### [Technical Problem]

The present disclosure is directed to providing a battery cell assembly with improved productivity and a battery pack including the same.

### [Technical Solution]

Embodiments of the present disclosure provide a battery cell assembly. The battery cell assembly includes a first battery cell including a first positive electrode lead and a first negative electrode lead, a second battery cell including a second positive electrode lead and a second negative electrode lead, and a first integrated circuit assembly coupled to the first and second battery cells and including a first insulating frame, and the first insulating frame includes a first slit penetrated by the first negative electrode lead of the first battery cell, a second slit penetrated by the second positive electrode lead of the second battery cell, and a third slit penetrated by the first negative electrode lead of the first battery cell.

The third slit may be between the first slit and the second slit.

The third slit may overlap the second positive electrode lead.

The first negative electrode lead of the first battery cell may include a portion between the first battery cell and the first insulating frame.

The first insulating frame may further include a first through-hole penetrating the first insulating frame, and the third slit may be connected to the first through-hole.

A portion of the first negative electrode lead of the first battery cell may be in the first through-hole.

The battery cell assembly may further include a third battery cell including a third positive electrode lead and a third negative electrode lead, and a second integrated circuit assembly coupled to the first to third battery cells and including a second insulating frame.

The second insulating frame may include a fourth slit penetrated by the third positive electrode lead of the third battery cell, a fifth slit penetrated by the second negative electrode lead of the second battery cell, and a sixth slit penetrated by the second negative electrode lead of the second battery cell.

The sixth slit may be between the fourth slit and the fifth slit.

The sixth slit may overlap the third positive electrode lead.

The second insulating frame may further include a second through-hole penetrating the second insulating frame, and the third slit may be connected to the second through-hole.

A portion of the second negative electrode lead of the second battery cell may be in the second through-hole.

Embodiments provide a battery cell assembly. The battery cell assembly includes a first battery cell including a first positive electrode lead and a first negative electrode lead, a second battery cell including a second positive electrode lead and a second negative electrode lead, a first integrated circuit assembly coupled to the first and second battery cells and including a first insulating frame, and a second integrated circuit assembly coupled to the first and second battery cells and including a second insulating frame, each of the first and second negative electrode leads has a shape that is folded twice, and each of the first and second positive electrode leads has a shape that is folded once.

The first negative electrode lead may penetrate the first insulating frame twice, and the second negative electrode lead may penetrate the second insulating frame twice.

The first positive electrode lead may penetrate the second insulating frame once, and the second positive electrode lead may penetrate the first insulating frame once.

The first insulating frame may include a first through-hole extending in a first direction, the second insulating frame may include a second through-hole extending in the first direction, the first negative electrode lead may be in the first through-hole, and the second negative electrode lead may be in the second through-hole.

### [Advantageous Effects]

According to embodiments of the present disclosure, an electrode lead cutting process of a battery cell can be omitted. Accordingly, throughput in the manufacture of a secondary battery can be improved.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a perspective view of a battery cell assembly according to embodiments.
FIG. 2 is a perspective view of a battery cell assembly according to embodiments.
FIG. 3 is a plan view of a battery cell assembly according to embodiments.
FIGS. 4 to 6 are exploded views of a battery cell assembly according to embodiments.
FIG. 7 illustrates a part of FIG. 6.
FIG. 8 is a partial cross-sectional view of a battery cell assembly according to embodiments.
FIG. 9 illustrates a part of FIG. 6.
FIG. 10 is a partial cross-sectional view of a battery cell assembly according to embodiments.
FIG. 11 is a partial plan view for describing a first insulating frame according to other embodiments.
FIG. 12 is a partial plan view for describing a second insulating frame according to other embodiments.
FIG. 13 is a plan view of a battery pack according to embodiments.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts matching corresponding to the present disclosure on the basis of the principle that the inventor(s) of the application can appropriately define the terms or expressions to optimally explain the present disclosure.

Therefore, embodiments set forth herein and configurations illustrated in the drawings are only embodiments of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

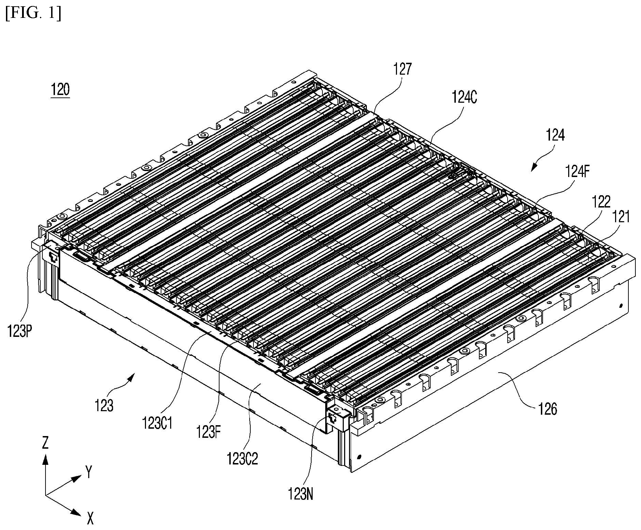

FIG. 1 is a perspective view of a battery cell assembly 120 according to embodiments.

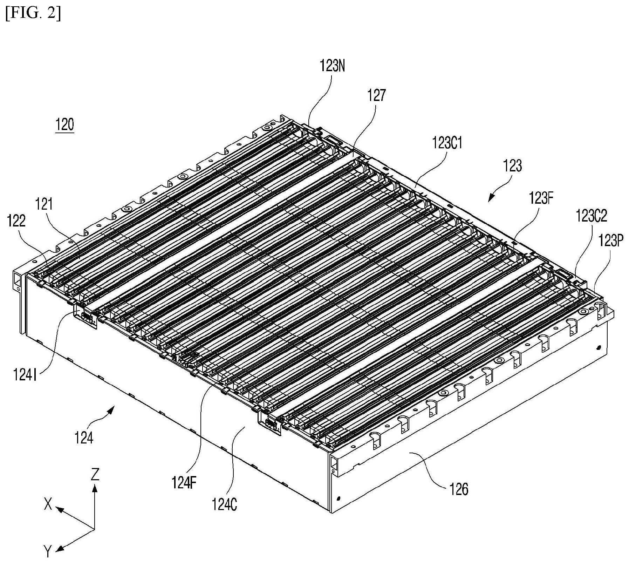

FIG. 2 is a perspective view of the battery cell assembly 120 according to embodiments, viewed from a direction different from that of FIG. 1.

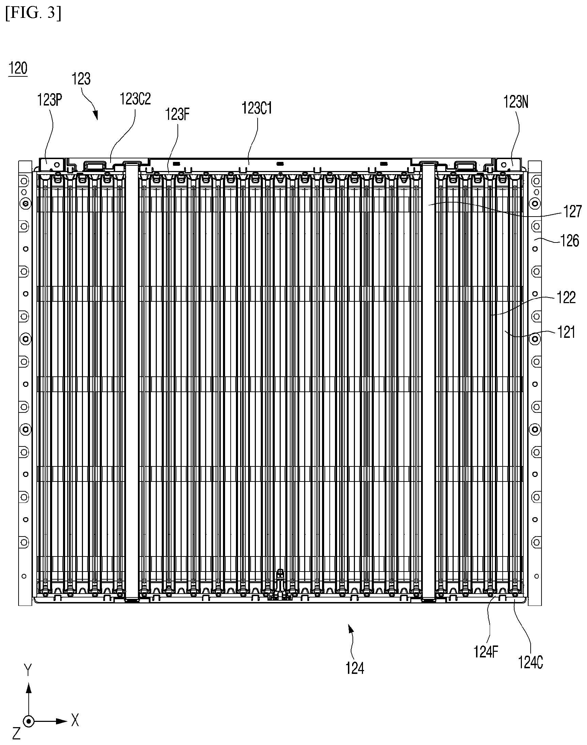

FIG. 3 is a plan view of the battery cell assembly 120 according to embodiments.

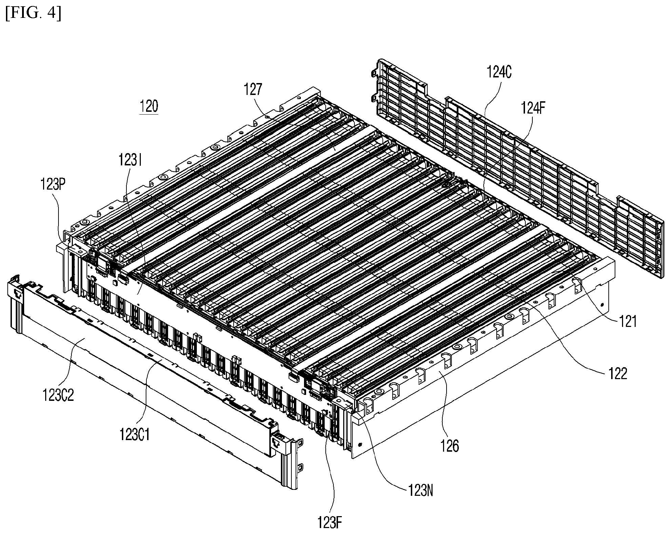

FIG. 4 is a partially exploded perspective view of the battery cell assembly 120 according to embodiments.

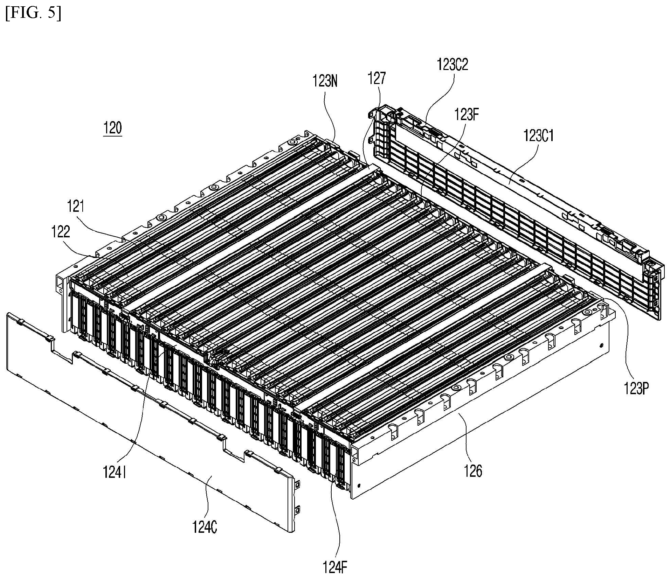

FIG. 5 is a partially exploded perspective view of the battery cell assembly 120 according to embodiments, viewed from a direction different from that of FIG. 4.

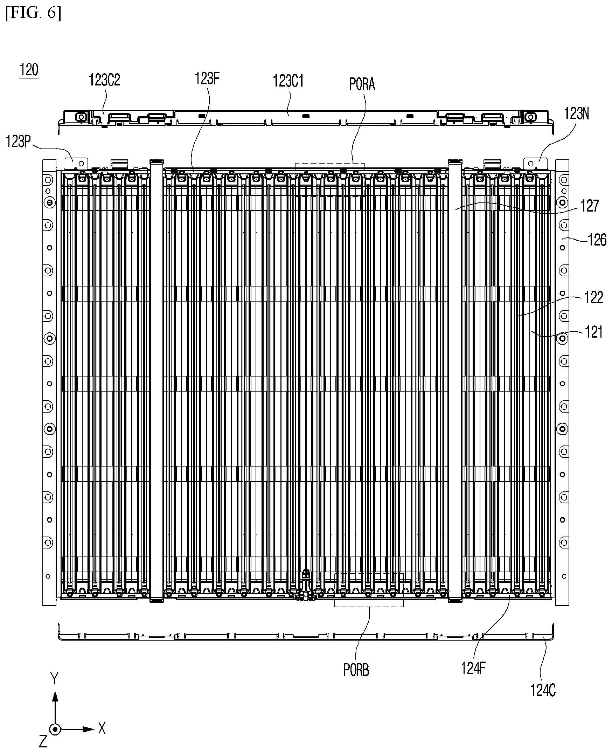

FIG. 6 is a partially exploded plan view of the battery cell assembly 120 according to embodiments.

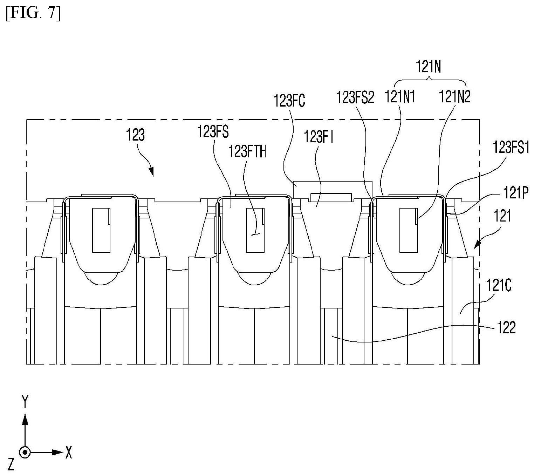

FIG. 7 illustrates a part PORA of FIG. 6.

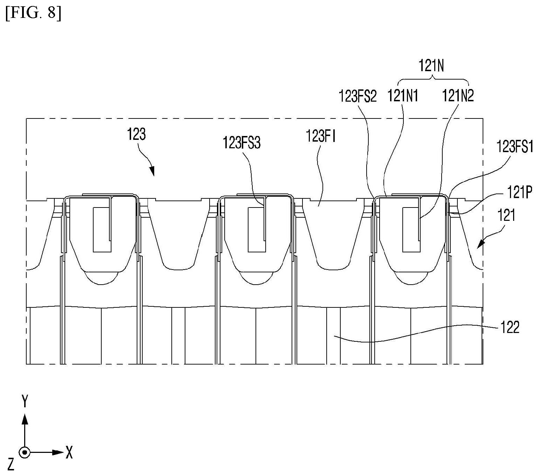

FIG. 8 is a partial cross-sectional view of the battery cell assembly 120 according to embodiments. More specifically, FIG. 8 overlaps FIG. 7.

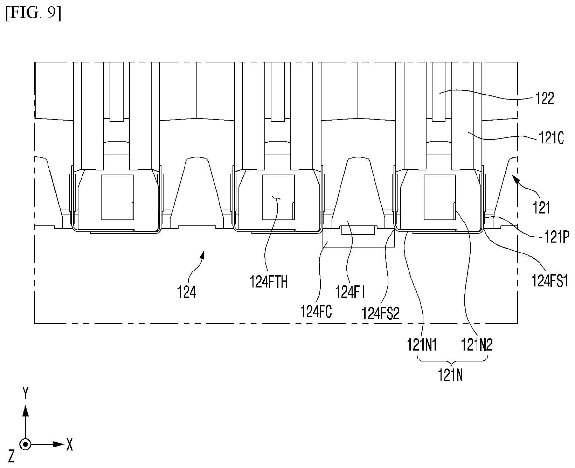

FIG. 9 illustrates a part PORB of FIG. 6.

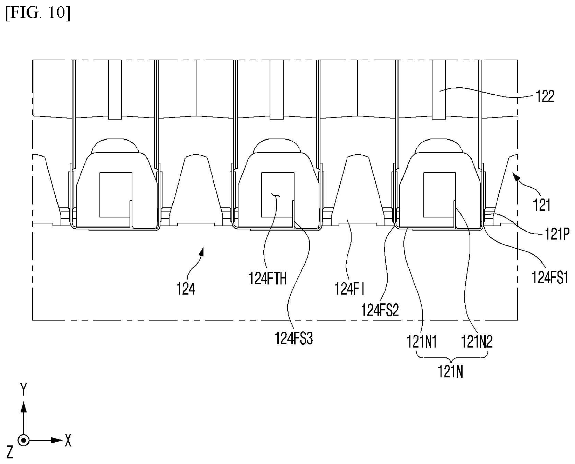

FIG. 10 is a partial cross-sectional view of the battery cell assembly 120 according to embodiments. More specifically, FIG. 10 overlaps FIG. 9.

Referring to FIGS. 1 to 10, the battery cell assembly 120 may include a plurality of battery cells 121, a plurality of pads 122, a first integrated circuit assembly 123, a second integrated circuit assembly 124, side beams 126, and a flat flexible cable (FFC) assembly 127. The battery cell assembly 120 may not include a module frame.

Each of the plurality of battery cells 121 may be a lithium ion battery. Each of the plurality of battery cells 121 includes an electrode assembly, an electrolyte, and a cell case 121C. The cell case 121C may include an aluminum laminate sheet, a cylindrical metal can, a prismatic metal can or a combination thereof.

The electrode assembly in the cell case 121C includes a positive electrode, a negative electrode, and a separator between the positive electrode and the negative electrode. The electrode assembly may be a jelly-roll type electrode assembly or a stack type electrode assembly. A jelly-roll type electrode assembly may include a structure in which a positive electrode, a negative electrode, and a separator between the positive and negative electrodes are wound together. A stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

Each of the plurality of battery cells 121 may include a positive electrode lead 121P and a negative electrode lead 121N. The positive electrode lead 121P and the negative electrode lead 121N may be referred to together as electrode leads. That is, an electrode lead may be understood to indicate the positive electrode lead 121P or the negative electrode lead 121N. The positive electrode lead 121P may be coupled to a negative electrode tab of the electrode assembly. The negative electrode lead 121N may be coupled to a negative electrode tab of the electrode assembly.

The plurality of battery cells 121 may be arranged in the X-axis direction. Each of the plurality of battery cells 121 may be a bidirectional cell. Accordingly, the positive electrode lead 121P and the negative electrode lead 121N of each of the plurality of battery cells 121 may protrude from the cell case 121C in opposite directions. The positive electrode lead 121P and the negative electrode lead 121N of each of the plurality of battery cells 121 may be spaced apart from each other in a Y-axis direction. The Y-axis direction may be substantially perpendicular to an X-axis direction. A direction substantially perpendicular to each of the X-axis direction and the Z-axis directions will be defined as a Z-axis direction.

Hereinafter, the technical idea of the present disclosure will be described with respect to an example in which each of the plurality of battery cells 121 is a bidirectional cell as described above. Those of ordinary skill in the art will be able to easily derive an embodiment in which each of the plurality of battery cells 121 is a unidirectional cell, based on the description herein.

According to embodiments, the plurality of battery cells 121 may constitute a plurality of banks. Each of the plurality of banks is a subgroup of battery cells 121 connected to each other in parallel among the plurality of battery cells 121. The number of battery cells 121 included in each of the plurality of banks (i.e., the number of battery cells 121 connected in parallel) may be determined according to a current to be output through the battery cell assembly 120.

Hereinafter, the technical idea of the present disclosure will be described focusing on an example in which each of the plurality of banks includes only one of the plurality of battery cells 121 (that is, an example in which each of the plurality of battery cells 121 is a bank). Those of ordinary skill in the art will be able to easily derive an example in which each bank includes a plurality of battery cells, based on the description herein.

Hereinafter, the plurality of battery cells are divided into odd-numbered battery cells 121 and even-numbered battery cells 121, because an orientation of the odd-numbered battery cells 121 and an orientation of the even-numbered battery cells 121 are different from each other. Accordingly, when each of the plurality of banks includes two or more battery cells 121, the characteristics and features of the odd-numbered battery cells 121 described above may also apply to battery cells 121 of an odd-numbered bank, and the characteristics and features of the even-numbered battery cells 121 described above may also apply to battery cells 121 of an even-numbered bank.

A positive electrode lead 121P of a first battery cell 121 may be short-circuited with a bus bar 123P. The positive electrode lead 121P of the first battery cell 121 may be welded to the bus bar 123P. A negative electrode lead 121N of a last battery cell 121 may be short-circuited with a bus bar 123N. The negative electrode lead 121N of the last battery cell 121 may be welded to the bus bar 123N. A resulting voltage of a circuit including the plurality of battery cells 121 may be output to the outside through the bus bars 123P and 123N.

The battery cells 121 between the first battery cell 121 and the last battery cell 121 may be referred to as intermediate battery cells 121. A negative electrode lead 121N of each of the intermediate battery cells 121 may be in contact with a positive electrode lead 121P of a subsequent battery cell 121. The negative electrode lead 121N of each of the intermediate battery cells 121 may be welded to the positive electrode lead 121P of the subsequent battery cell 121. A positive electrode lead 121P of each of the intermediate battery cells 121 may be in contact with the negative electrode lead 121N of a preceding battery cell 121. The positive electrode lead 121P of each of the intermediate battery cells 121 may be welded to the negative electrode lead 121N of the preceding battery cell 121.

According to embodiments, each of the plurality of pads 122 may include polyurethane. According to embodiments, each of the plurality of pads 122 may include an elastic material. The plurality of pads 122 may absorb the swelling of the plurality of battery cells 121. Two battery cells 121 may be interposed between neighboring two pads 122 among the plurality of pads 122 but embodiments are not limited thereto. A thickness of each of the plurality of pads 122 and an arrangement of the plurality of pads 122 based on the plurality of battery cells 121 may be variously changed within a range satisfying a swelling absorption condition.

According to other embodiments, the plurality of pads 122 may be thermal barriers. According to embodiments, each of the plurality of pads 122 may have a high melting temperature and low thermal conductivity. When each of the plurality of pads 122 is a thermal barrier, each of the plurality of pads 122 may include a flame-retardant material such as ceramic or coated glass fiber.

The first integrated circuit assembly 123 may be provided on the front of the battery cell assembly 120. The first integrated circuit assembly 123 may be coupled to the plurality of battery cells 121. A positive electrode lead 121P of each of the odd-numbered battery cells 121 and a negative electrode lead 121N of each of the even-numbered battery cells 121 may be provided on the front of the battery cell assembly 120.

A distance between the positive electrode lead 121P of each of the odd-numbered battery cells 121 and the first integrated circuit assembly 123 may be less than a distance between the positive electrode lead 121P of each of the odd-numbered battery cells 121 and the second integrated circuit assembly 124.

A distance between the negative electrode lead 121N of each of the even-numbered battery cells 121 and the first integrated circuit assembly 123 may be less than a distance between the negative electrode lead 121N of each of the even-numbered battery cells 121 and the second integrated circuit assembly 124.

The first integrated circuit assembly 123 may include a first insulating frame 123F, a first integrated circuit 123I, bus bars 123P and 123N, a first insulating cover 123C1, and a second insulating cover 123C2.

The first insulating frame 123F may include an insulating material. The first insulating frame 123F may support the first integrated circuit 123I, the first bus bar 123P, the second bus bar 123N, the positive electrode lead 121P of each of the odd-numbered battery cells 121, and the negative electrode lead 121N of each of the even-numbered battery cells 121.

The first insulating frame 123F may include a plurality of lead support parts 123FS and a plurality of spacing parts 123FI. The plurality of lead support parts 123FS and the plurality of spacing parts 123FI may alternate in the X-axis direction. One of the plurality of spacing parts 123FI may be between two neighboring ones of the plurality of lead support parts 123FS, and one of the plurality of lead support parts 123FS may be between two neighboring ones of the plurality of spacing parts 123FI.

A plurality of first slits 123FS1 and a plurality of second slits 123FS2 may be provided between the plurality of lead support parts 123FS and a plurality of spacing parts 123FI. The plurality of first slits 123FS1 and the plurality of second slits 123FS2 may alternate in the X-axis direction. One of the plurality of second slits 123FS2 may be between two neighboring ones of the plurality of first slits 123FS1, and one of the plurality of first slits 123FS1 may be between two neighboring ones of the plurality of second slits 123FS2.

The plurality of first slits 123FS1 and the plurality of second slits 123FS2 may each penetrate the first insulating frame 123F in the Y-axis direction. The plurality of first slits 123FS1 and the plurality of second slits 123FS2 may each have a small width in the X-axis direction. A height of each of the plurality of first slits 123FS1 and the plurality of second slits 123FS2 in the Z-axis direction may be greater than a width thereof in the X-axis direction. Accordingly, the plurality of first slits 123FS1 and the plurality of second slits 123FS2 may each allow the first insulating frame 123F to be penetrated by the positive electrode leads 121P and the negative electrode leads 121N of the plurality of battery cells 121.

Each of the plurality of first slits 123FS1 may overlap a corresponding one of the odd-numbered battery cells 121 in the Y-axis direction. The positive electrode lead 121P of each of the odd-numbered battery cells 121 may penetrate a corresponding one of the plurality of first slits 123FS1. Each of the plurality of second slits 123FS2 may overlap a corresponding one of the even-numbered battery cells 121 in the Y-axis direction. The negative electrode lead 121N of each of the even-numbered battery cells 121 may penetrate a corresponding one of the plurality of second slits 123FS2.

The first insulating frame 123F may further include a plurality of third slits 123FS3. The plurality of third slits 123FS3 may be in a corresponding one of the plurality of lead support parts 123FS. Each of the plurality of third slits 123FS3 may be interposed between one of the plurality of first slits 123FS1 and one of the plurality of second slits 123FS2.

Each of the plurality of third slits 123FS3 may penetrate the first insulating frame 123F in the Y-axis direction. Each of the plurality of third slits 123FS3 may have a small width in the X-axis direction. A height of each of the plurality of third slits 123FS3 in the Z-axis direction may be greater than a width thereof in the X-axis direction. Each of the plurality of third slits 123FS3 may allow the first insulating frame 123F to be penetrated by even-numbered negative electrode leads 121N.

The negative electrode lead 121N of each of the even-numbered battery cells 121 may penetrate a corresponding one of the plurality of third slits 123FS3. The positive electrode lead 121P of each of the odd-numbered battery cells 121 may overlap a corresponding one of the plurality of third slits 123FS3 in the Y-axis direction.

The first insulating frame 123F may include a plurality of through-holes 123FTH. The plurality of through-holes 123FTH may extend in the Z-axis direction. The plurality of through-holes 123FTH may penetrate the first insulating frame 123F. A through-jig may be inserted into the plurality of through-holes 123FTH during the welding of the positive electrode lead 121P and the negative electrode lead 121N together, thus preventing damage to the first insulating frame 123F due to a welding energy source (e.g., a laser beam) in a welding process.

Each of the plurality of through-holes 123FTH may be in a corresponding one of the plurality of lead support parts 123FS. Each of the plurality of through-holes 123FTH may be connected to a corresponding one of the plurality of third slits 123FS3. The negative electrode lead 121N of each of the even-numbered battery cells 121 penetrating the corresponding one of the plurality of third slits 123FS3 may include a second portion 121N2 in the corresponding one of the plurality of through-holes 123FTH.

The negative electrode lead 121N of each of the even-numbered battery cells 121 may further include a first portion 121N1 interposed between the positive electrode lead 121P and the first insulating frame 123F (more specifically, the support part 123FS of the first insulating frame 123F). The negative electrode lead 121N of each of the even-numbered battery cells 121 may have a shape that is folded twice. The positive electrode lead 121P of each of the odd-numbered battery cells 121 may have a shape that is folded once but embodiments are not limited thereto.

The negative electrode leads 121N of each of the even-numbered battery cells 121 may penetrate the first insulating frame 123F twice. The positive electrode leads 121P of each of the odd-numbered battery cells 121 may penetrate the first insulating frame 123F once.

The plurality of spacing parts 123FI may include a rib structure and thus the first insulating frame 123F may have high mechanical robustness. The first insulating frame 123F may include fastening parts 123FC connected to some of the plurality of spacing parts 123FI. The fastening parts 123FC may be used to fasten the first insulating frame 123F and the first insulating cover 123C1.

According to embodiments, each of the plurality of pads 122 may overlap a corresponding one of the plurality of spacing parts 123FI in the Y-axis direction. According to embodiments, the plurality of pads 122 may cross the plurality of lead support parts 123FS. According to embodiments, each of the plurality of pads 122 may not overlap each of the plurality of lead support parts 123FS in the Y-axis direction. According to embodiments, each of the plurality of pads 122 may be spaced apart from one of the plurality of lead support parts 123FS in the X-axis direction.

The first integrated circuit 123I may be mounted on the first insulating frame 123F. The first integrated circuit 123I may be configured to be electrically connected to the positive electrode lead 121P of each of the odd-numbered battery cells 121 and the negative electrode lead 121N of each of the even-numbered battery cells 121. The first integrated circuit 123I may be configured to sense voltages of a plurality of nodes composed of the plurality of battery cells 121.

The first integrated circuit 123I may include a plurality of sensing plates welded to the positive electrode leads 121P of the odd-numbered battery cells 121 and the negative electrode leads 121N of the even-numbered battery cells 121. The first integrated circuit 123I may be connected to the positive electrode lead 121P of each of the odd-numbered battery cells 121 and the negative electrode lead 121N of each of the even-numbered battery cells 121 through wires, and in this case, the plurality of sensing plates may be omitted.

The first insulating cover 123C1 may be mounted on the first insulating frame 123F. The first insulating cover 123C1 may be coupled to the first insulating frame 123F by interference fit. The first insulating cover 123C1 may include an insulating material. The first insulating cover 123C1 may cover and protect the positive electrode lead 121P of each of the odd-numbered battery cells 121 and the negative electrode lead 121N of each of the even-numbered battery cells 121. The first insulating cover 123C1 may include slits exposing the bus bars 123P and 123N. The bus bars 123P and 123N may be brought into contact with an external electrical element (e.g., an inter-bus bar or the like) through the slits of the first insulating cover 123C1.

The second insulating cover 123C2 may be mounted on the first insulating cover 123C1. The second insulating cover 123C2 may be coupled to the first insulating cover 123C1 by interference fit. The second insulating cover 123C2 may include an insulating material. An additional integrated circuit may be provided between the second insulating cover 123C2 and the first insulating cover 123C1. The additional integrated circuit may be connected to the first integrated circuit 123I.

The second integrated circuit assembly 124 may be provided on the rear of the battery cell assembly 120. The front of the battery cell assembly 120 may be opposite to the rear of the battery cell assembly 120. The second integrated circuit assembly 124 may be spaced apart from the first integrated circuit assembly 123 with the plurality of battery cells 121 therebetween. The second integrated circuit assembly 124 may be coupled to the plurality of battery cells 121. The negative electrode lead 121N of each of the odd-numbered battery cells 121 and the positive electrode lead 121P of each of the even-numbered battery cells 121 may be on a rear side.

A distance between the negative electrode lead 121N of each of the odd-numbered battery cells 121 and the second integrated circuit assembly 124 may be less than a distance between the negative electrode lead 121N of each of the odd-numbered battery cells 121 and the first integrated circuit assembly 123.

A distance between the positive electrode lead 121P of each of the even-numbered battery cells 121 and the second integrated circuit assembly 124 may be less than a distance between the positive electrode lead 121P of each of the even-numbered battery cells 121 and the first integrated circuit assembly 123.

The second integrated circuit assembly 124 may include a second insulating frame 124F, a second integrated circuit 124I, and an insulating cover 124C. The second insulating frame 124F may include an insulating material. The second insulating frame 123F may support the second integrated circuit 124I, the insulating cover 124C, the negative electrode lead 121N of each of the odd-numbered battery cells 121, and the positive electrode lead 121N of each of the even-numbered battery cells 121.

The second insulating frame 124F may include a plurality of lead support parts 124FS and a plurality of spacing parts 124FI. The plurality of lead support parts 124FS and the plurality of spacing parts 124FI may alternate in the X-axis direction. One of the plurality of spacing parts 124FI may be between two neighboring ones of the plurality of lead support parts 124FS, and one of the plurality of lead support parts 124FS may be between two neighboring ones of the plurality of spacing parts 124FI.

A plurality of first slits 124FS1 may be between the plurality of lead support parts 124FS and the plurality of spacing parts 124FI. The plurality of first slits 124FS1 may be boundaries between the plurality of lead support parts 124FS and the plurality of spacing parts 124FI.

A plurality of second slits 124FS2 may be between the plurality of lead support parts 124FS and the plurality of spacing parts 124FI. The plurality of second slits 124FS2 may be boundaries between the plurality of lead support parts 124FS and the plurality of spacing parts 124FI.

The plurality of first slits 124FS1 and the plurality of second slits 124FS2 may alternate in the X-axis direction. One of the plurality of second slits 124FS2 may be between two neighboring ones of the plurality of first slits 124FS1, and one of the plurality of first slits 124FS1 may be between two neighboring ones of the plurality of second slits 124FS2.

The plurality of first slits 124FS1 and the plurality of second slits 124FS2 may each penetrate the second insulating frame 124F in the Y-axis direction. The plurality of first slits 124FS1 and the plurality of second slits 124FS2 may each have a small width in the X-axis direction. A height of each of the plurality of first slits 124FS1 and the plurality of second slits 124FS2 in the Z-axis direction may be greater than a width thereof in the X-axis direction. The plurality of first slits 124FS1 and the plurality of second slits 124FS2 may each allow the second insulating frame 124F to be penetrated by the positive electrode leads 121P and the negative electrode leads 121N of the plurality of battery cells 121.

Each of the plurality of first slits 124FS1 may overlap a corresponding one of the even-numbered battery cells 121 in the Y-axis direction. The positive electrode lead 121P of each of the even-numbered battery cells 121 may penetrate a corresponding one of the plurality of first slits 124FS1. Each of the plurality of second slits 124FS2 may overlap a corresponding one of the odd-numbered battery cells 121 in the Y-axis direction. The negative electrode lead 121N of each of the odd-numbered battery cells 121 may penetrate a corresponding one of the plurality of second slits 124FS2.

The second insulating frame 124F may further include a plurality of third slits 124FS3. The plurality of third slits 124FS3 may be in a corresponding one of the plurality of lead support parts 124FS. Each of the plurality of third slits 124FS3 may be interposed between one of the plurality of first slits 124FS1 and one of the plurality of second slits 124FS2.

Each of the plurality of third slits 124FS3 may penetrate the second insulating frame 124F in the Y-axis direction. Each of the plurality of third slits 124FS3 may have a small width in the X-axis direction. A height of each of the plurality of third slits 124FS3 in the Z-axis direction may be greater than a width thereof in the X-axis direction. Each of the plurality of third slits 124FS3 may allow the second insulating frame 124F to be penetrated by the negative electrode leads 121N of the even-numbered battery cells 121.

The negative electrode lead 121N of each of the odd-numbered battery cells 121 may penetrate a corresponding one of the plurality of third slits 124FS3. The negative electrode lead 121P of each of the even-numbered battery cells 121 may overlap a corresponding one of the plurality of third slits 124FS3 in the Y-axis direction.

The second insulating frame 124F may include a plurality of through-holes 124FTH. The plurality of through-holes 124FTH may extend in the Z-axis direction. The plurality of through-holes 124FTH may penetrate the second insulating frame 124F. A through-jig may be inserted into the plurality of through-holes 124FTH during the welding of the positive electrode lead 121P and the negative electrode lead 121N together, thus preventing damage to the second insulating frame 124F due to an energy source in a welding process.

Each of the plurality of through-holes 124FTH may be in a corresponding one of the plurality of lead support parts 124FS. Each of the plurality of through-holes 124FTH may be connected to a corresponding one of the plurality of third slits 124FS3. The negative electrode lead 121N of each of the odd-numbered battery cells 121 penetrating the corresponding one of the plurality of third slits 124FS3 may include a second portion 121N2 in the corresponding one of the plurality of through-holes 124FTH.

The negative electrode lead 121N of each of the odd-numbered battery cells 121 may further include a first portion 121N1 between the positive electrode lead 121P and the second insulating frame 124F (more specifically, the support part 124FS of the second insulating frame 124F). The negative electrode lead 121N of each of the odd-numbered battery cells 121 may have a shape that is folded twice. The positive electrode lead 121P of each of the even-numbered battery cells 121 may have a shape that is folded once but embodiments are not limited thereto.

The negative electrode leads 121N of each of the odd-numbered battery cells 121 may penetrate the second insulating frame 124F twice. The positive electrode leads 121P of each of the even-numbered battery cells 121 may penetrate the second insulating frame 124F once.

The plurality of spacing parts 124FI may include a rib structure and thus the second insulating frame 124F may have high mechanical robustness. The second insulating frame 124F may include fastening parts 124FC connected to some of the plurality of spacing parts 124FI. The fastening parts 124FC may be used to fasten the second insulating frame 124F and the insulating cover 124C.

According to embodiments, each of the plurality of pads 122 may overlap a corresponding one of the plurality of lead support parts 124FS in the Y-axis direction. According to embodiments, the plurality of pads 122 may cross the plurality of spacing parts 124FI. According to embodiments, each of the plurality of pads 122 may not overlap each of the plurality of spacing parts 124FI in the Y-axis direction. According to embodiments, each of the plurality of pads 122 may be spaced apart from each of the plurality of spacing parts 124FI in the X-axis direction.

A width of each of the plurality of lead support parts 123FS in the X-axis direction may be different from a width of each of the plurality of lead support parts 124FS in the X-axis direction. The width of each of the plurality of lead support parts 123FS in the X-axis direction may be less than the width of each of the plurality of lead support parts 124FS in the X-axis direction.

A length of a portion of the negative electrode lead 121N in the plurality of through-holes 123FTH may be different from a length of a portion of the negative electrode lead 121N in the plurality of through-holes 124FTH. The length of the portion of the negative electrode lead 121N in the plurality of through-holes 123FTH may be greater than the length of the portion of the negative electrode lead 121N in the plurality of through-holes 124FTH.

A width of each of the plurality of spacing parts 123FI in the X-axis direction may be different from a width of each of the plurality of spacing parts 123FI in the X-axis direction. The width of each of the plurality of spacing parts 123FI in the X-axis direction may be greater than the width of each of the plurality of spacing parts 123FI in the X-axis direction.

The difference between a width of each of the plurality of lead support parts 123FS in the X-axis direction and a width of each of the plurality of lead support parts 124FS in the X-axis direction and the difference between a width of each of the plurality of spacing parts 123FI in the X-axis direction and a width of each of the plurality of spacing parts 124FI in the X-axis direction are caused by the arrangement of the plurality of pads 122 and the plurality of battery cells 121.

According to embodiments, the negative electrode lead 121N of each of the plurality of battery cells 121 may be inserted into a corresponding one of the plurality of through-holes 123FTH and the plurality of through-holes124FTH via a corresponding one of the plurality of third slits 123FS3 and the plurality of third slits 124FS3, and thus, a cutting process of the negative electrode lead 121N of each of the plurality of battery cells 121 may be omitted regardless of the difference between the width of each of the plurality of lead support parts 123FS in the X-axis direction and the width of each of the plurality of lead support parts 124FS in the X-axis direction. According to embodiments, a cutting process of the positive electrode lead 121P and the negative electrode lead 121N of each of the plurality of battery cells 121 may be omitted, and the throughput in the manufacture of a secondary battery may be improved.

According to embodiments, a lead cutting process is not performed and thus lengths of the negative electrode leads 121N protruding from the cell cases 121C of the plurality of battery cells 121 may be substantially the same. According to embodiments, the lead cutting process is not performed and thus lengths of the positive electrode leads 121P protruding from the cell cases 121C of the plurality of battery cells 121 may be substantially the same.

The second integrated circuit 124I may be mounted on the second insulating frame 124F. The second integrated circuit 124I may be configured to be electrically connected to the negative electrode lead 121N of each of the odd-numbered battery cells 121 and the positive electrode lead 121P of each of the even-numbered battery cells 121. The second integrated circuit 123I may be configured to sense voltages of a plurality of nodes composed of the plurality of battery cells 121.

The second insulating cover 124C may be mounted on the second frame 124F. The second insulating cover 124C may be coupled to the second frame 124F by interference fit. The second insulating cover 124C may include an insulating material. The second insulating cover 124C may cover and protect the negative electrode lead 121N of each of the odd-numbered battery cells 121 and the positive electrode lead 121P of each of the even-numbered battery cells 121.

The side beams 126 may be spaced apart from each other with the plurality of battery cells 121 therebetween. The side beams 126 may cover the plurality of battery cells 121. The side beams 126 may horizontally support the plurality of battery cells 121. The side beams 126 may be fixed to the plurality of battery cells 121 via an adhesive material or the like.

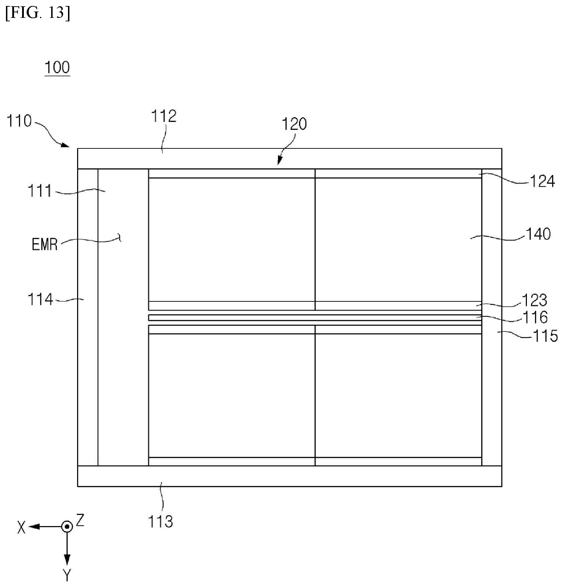

According to embodiments, the side beams 126 may have substantially the same shape. According to embodiments, the side beams 126 may be symmetrically arranged. When the battery cell assembly 120 is loaded into a pack housing 110 (see FIG. 13), the side beams 126 may be coupled to corresponding ones of support beams of the pack housing 110 (see FIG. 13). The side beams 126 may be fastened to the corresponding ones of the supporting beams by a mechanical method such as bolting.

The FFC assembly 127 may be on the plurality of battery cells 121. The FFC assembly 127 may have an approximate line shape. The FFC assembly 127 may connect the first integrated circuit 124I and the second integrated circuit 124I to each other. Voltages collected by the second integrated circuit 124I may be transmitted to the first integrated circuit 124I through the FFC assembly 127.

### (Second Embodiment)

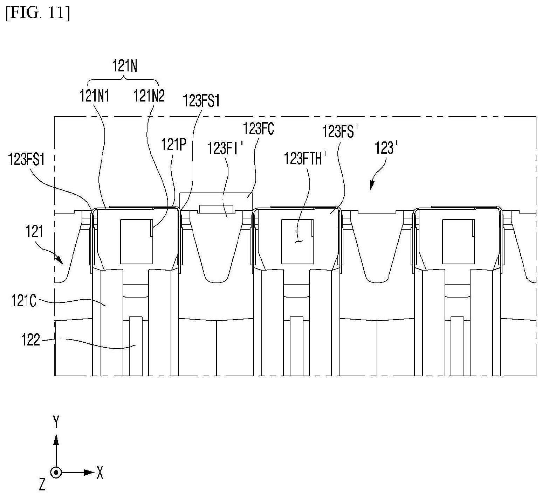

FIG. 11 is a partial plan view for describing a first insulating frame 123F' according to other embodiments.

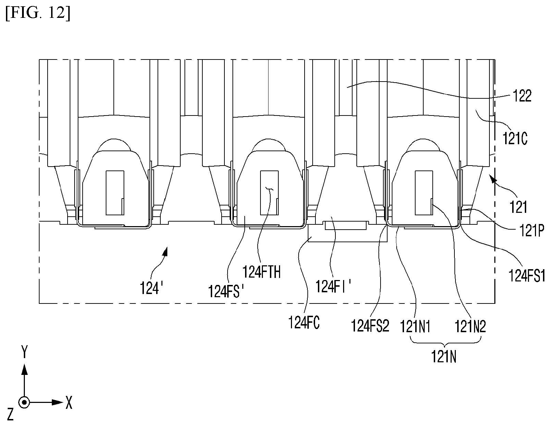

FIG. 12 is a partial plan view for describing a second insulating frame 124F' according to other embodiments.

Referring to FIGS. 11 and 12, the first insulating frame 123F' may include a plurality of lead support parts 123FS' and a plurality of spacing parts 123FI' that alternate in the X-axis direction, and the second insulating frame 124F' may include a plurality of lead support parts 124FS' and a plurality of spacing parts 124FI' that alternate in the X-axis direction,

The first insulating frame 123F' is substantially the same as the first insulating frame 123F of FIG. 7 but each of a plurality of pads 122 may overlap a corresponding one of the plurality of lead support parts 123FS' in the Y-axis direction, and thus, a width of each of the plurality of lead support parts 123FS' in the X-axis direction may be greater than a width of each of the plurality of lead support parts 123FS in the X-axis direction, and a width of each of the plurality of spacing parts123FI' in the X-axis direction may be less than a width of each of the plurality of spacing parts 123FI in the X-axis direction.

The second insulating frame 124F' is substantially the same as the second insulating frame 124F of FIG. 9 but each of the plurality of pads 122 may not overlap each of the plurality of lead support parts 124FS' in the Y-axis direction, and thus, a width of each of the plurality of lead support parts 124FS' in the X-axis direction may be less than a width of each of the plurality of lead support parts 124FS in the X-axis direction, and a width of each of the plurality of spacing parts124FI' in the X-axis direction may be greater than a width of each of the plurality of spacing parts 124FI in the X-axis direction.

### (Third Embodiment)

FIG. 13 is a plan view for describing a battery pack 100 according to embodiments.

Referring to FIG. 13, the battery pack 100 may include the pack housing 110 and a plurality of battery cell assemblies 120. The battery pack 100 may be a final product to be mounted in an application such as a vehicle.

The pack housing 110 may provide a space for mounting the battery cell assemblies 120 therein. The pack housing 110 may include a base plate 111, side walls 112, 113, 114, and 115, and a center beam 116.

Each of the base plate 111 and the side walls 112 and 113 may be provided by an extrusion process. An extrusion direction of each of the base plate 111 and the side walls 112 and 113 may be the X-axis direction. The side walls 114 and 115 may also be provided by the extrusion process. The side walls 112, 113, 114, and 115 may be substantially perpendicular to the base plate 111.

According to embodiments, the base plate 111 and the side walls 112 and 113 may be coupled by friction stir welding. The base plate 111 may include a plurality of unit plates coupled to each other by friction stir welding.

The center beam 116 may extend in the X-axis direction. The center beam 116 may be interposed between the side walls 112 and 113. The center beam 116 may be included in a center plate that is one of the plurality of unit plates coupled to each other by friction stir welding. Accordingly, the center beam 116 may be formed together with the center plate and be an element integrally formed with the center plate.

The base plate 111 may include a plurality of cooling channels. The plurality of cooling channels may provide a passage for moving, for example, a refrigerant such as water. The plurality of cooling channels may be formed by the extrusion process. The plurality of cooling channels may extend in the X-axis direction. The plurality of cooling channels may be spaced apart from each other in the Y-axis direction.

The plurality of battery cell assemblies 120 may be on the base plate 111 of the pack housing 110. The base plate 111 may support the plurality of battery cell assemblies 120. The side walls 112, 113, 114, and 115 may horizontally surround the plurality of battery cell assemblies 120. The side walls 112, 113, 114, and 115 may protect the plurality of battery cell assemblies 120.

Each of the plurality of battery cell assemblies 120 is substantially the same as the battery cell assembly 120 described above with reference to FIGS. 1 to 3. In FIG. 4, an array of the plurality of battery cell assemblies 120 may be a 2x2 array. The arrangement of the plurality of battery cell assemblies 120 of FIG. 4 is a non-limiting example and should not be understood as limiting the technical idea of the present disclosure in any sense. Those of ordinary skill in the art will be able to easily derive the plurality of battery cell assemblies 120 arranged in a PxQ array (here, P and Q are each an integer of 1 or more), based on the above description.

The battery pack 100 may further include a battery management system (BMS). The BMS may be configured to monitor, balance, and control the battery pack 100. The monitoring of the battery pack 100 may include measuring voltages and currents of certain nodes in the plurality of battery cell assemblies 120 and measuring temperatures at set positions in the battery pack 100.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions to prevent a decrease in the lifespan of each of the plurality of battery cell assemblies 120.

The battery pack 100 may further include a lid coupled to the side walls 112, 113, 114, and 115 of the pack housing 110. The lid may cover elements, such as the battery cell assemblies 120 and electronic components, inside the battery pack 100. The lid may be fixed to the pack housing 110 by a mechanical coupling means such as bolting.

The battery pack 100 may further include exhaust devices coupled to the side walls 114 and 115. One of the side walls 114 and 115 may include exhaust holes connected to the exhaust devices. The exhaust devices may be configured to delay thermal propagation by discharging a high-temperature gas from the inside of the battery pack 100 to the outside when a thermal runaway event occurs in the plurality of battery cell assemblies 120.

Here, the thermal runaway event of the plurality of battery cell assemblies 120 is a state in which a change of temperature of the plurality of battery cell assemblies 120 accelerates the change of temperature, and is uncontrollable positive feedback. A temperature of the plurality of battery cell assemblies 120 that are in a thermal runaway state sharply increases, and a large amount of a high-pressure gas and combustion debris are discharged therefrom.

The battery pack 100 may further include additional electronic components such as a cooling device, a power relay assembly (PRA), and a safety plug. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs. The additional electronic components may be interposed between the plurality of battery cell assemblies 120 and the side wall 115. A space between the battery cell assemblies 120 and the side wall 115 may be referred to as an electronic component mounting area.

The battery pack 100 may further include a plurality of inter-bus bars configured to electrically connect the plurality of battery cell assemblies 120. The plurality of battery cell assemblies 120 may be connected in series via the plurality of inter-bus bars. Accordingly, the battery pack 100 may be configured to output a high voltage to an external load (e.g., a motor of a vehicle).

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery cell assembly comprising:
a first battery cell including a first positive electrode lead and a first negative electrode lead;
a second battery cell including a second positive electrode lead and a second negative electrode lead; and
a first integrated circuit assembly coupled to the first and second battery cells and including a first insulating frame,
wherein the first insulating frame includes a first slit penetrated by the first negative electrode lead of the first battery cell, a second slit penetrated by the second positive electrode lead of the second battery cell, and a third slit penetrated by the first negative electrode lead of the first battery cell.

2. The battery cell assembly of claim 1, wherein the third slit is between the first slit and the second slit.

3. The battery cell assembly of claim 1, wherein the third slit overlaps the second positive electrode lead.

4. The battery cell assembly of claim 1, wherein the first negative electrode lead of the first battery cell includes a portion between the first battery cell and the first insulating frame.

5. The battery cell assembly of claim 1, wherein the first insulating frame further includes a first through-hole penetrating the first insulating frame, and
the third slit is connected to the first through-hole.

6. The battery cell assembly of claim 5, wherein a portion of the first negative electrode lead of the first battery cell is in the first through-hole.

7. The battery cell assembly of claim 1, further comprising:
a third battery cell including a third positive electrode lead and a third negative electrode lead; and
a second integrated circuit assembly coupled to the first to third battery cells and including a second insulating frame,
wherein the second insulating frame includes a fourth slit penetrated by the third positive electrode lead of the third battery cell, a fifth slit penetrated by the second negative electrode lead of the second battery cell, and a sixth slit penetrated by the second negative electrode lead of the second battery cell.

8. The battery cell assembly of claim 7, wherein the sixth slit is between the fourth slit and the fifth slit.

9. The battery cell assembly of claim 7, wherein the sixth slit overlaps the third positive electrode lead.

10. The battery cell assembly of claim 7, wherein the second insulating frame further includes a second through-hole penetrating the second insulating frame, and
the third slit is connected to the second through-hole.

11. The battery cell assembly of claim 10, wherein a portion of the second negative electrode lead of the second battery cell is in the second through-hole.

12. A battery cell assembly comprising:
a first battery cell including a first positive electrode lead and a first negative electrode lead;
a second battery cell including a second positive electrode lead and a second negative electrode lead;
a first integrated circuit assembly coupled to the first and second battery cells and including a first insulating frame; and
a second integrated circuit assembly coupled to the first and second battery cells and including a second insulating frame,
wherein each of the first and second negative electrode leads has a shape that is folded twice, and
each of the first and second positive electrode leads has a shape that is folded once.

13. The battery cell assembly of claim 12, wherein the first negative electrode lead penetrates the first insulating frame twice, and
the second negative electrode lead penetrates the second insulating frame twice.

14. The battery cell assembly of claim 12, wherein the first positive electrode lead penetrates the second insulating frame once, and
the second positive electrode lead penetrates the first insulating frame once.

15. The battery cell assembly of claim 12, wherein the first insulating frame includes a first through-hole extending in a first direction,
the second insulating frame includes a second through-hole extending in the first direction,
the first negative electrode lead is in the first through-hole, and
the second negative electrode lead is in the second through-hole.
